# EUROPÄISCHE PATENTSCHRIFT

(11) **EP 1 464 849 B1**
(45) Veröffentlichungstag und Bekanntmachung des Hinweises auf die Patenterteilung: **28.09.2005**
(21) Anmeldenummer: 04007036.9
(22) Anmeldetag: 24.03.2004
(51) Int. Cl.: F16B 7/14

(54) **Höhenverstellbarer Standfuss**
Adjustable telescoping support
Appui télescopant réglable

(30) Priorität: 04.04.2003 DE 10315613
(43) Veröffentlichungstag der Anmeldung: 06.10.2004
(73) Patentinhaber: Rittal GmbH & Co. KG, 35745 Herborn (DE)
(72) Erfinder: Root, Paul, 35080 Bad Endbach (DE)
(74) Vertreter: Fleck, Hermann-Joseph

(56) Entgegenhaltungen:
- DE-A- 19 540 443
- DE-U- 29 717 853
- FR-A- 2 332 449
- GB-A- 327 802
- GB-A- 2 352 534
- NL-A- 8 800 573
- US-A- 3 690 608

## Beschreibung

Die Erfindung bezieht sich auf einen höhenverstellbaren Standfuß mit einer auf einem Fußabschnitt montierten Säule, die aus einem Außenprofil und einem darin teleskopartig verschieblich gelagerten, in verschiedenen Stellungen festlegbaren Innenprofil gebildet ist.

Mit diesen Maßnahmen ergeben sich auf einfache Weise verschiedene Gestaltungsvarianten, wobei auch ein Anwender verschiedene Innenprofile unterschiedlichen Querschnitts einsetzen kann, die er z.B. nach eigenem Bedarf mit unterschiedlichen Kopfteilen versehen kann.

Dabei besteht eine vorteilhafte Ausgestaltung für verschiedenartige Innenprofile darin, dass im Querschnitt eckige und gerundete Innenkonturabschnitte vorgesehen sind und dass verschiedene Innenprofile mit an die Innenkonturabschnitte angepassten eckigen und gerundeten Außenkonturabschnitten vorgesehen sind. Sind dabei die gerundeten Innenkonturabschnitte kreisabschnittförmig auf einer Kreisbahn angeordnet, ist es auch möglich, das Innenprofil um die vertikale Achse zu drehen. Eckige Konturabschnitte hingegen können verwendet werden, wenn ein Verdrehen um die vertikale Achse nicht erwünscht ist.

Eine vorteilhafte Ausgestaltung besteht darin, dass mindestens drei eckige Innenkonturabschnitte und mindestens drei gerundete Innenkonturabschnitte vorhanden sind, in denen mindestens zwei verschiedene Innenprofile führbar sind, von denen das eine mindestens drei angepasste eckige Außenkonturabschnitte und das andere mindestens drei angepasste gerundete Außenkonturabschnitte aufweist.

Nach dem Oberbegriff des neuen Anspruches 1 geht die Erfindung von einem höhenverstellbaren Standfuß aus, wie er (im allgemeinsten Sinne) aus der DE 297 1 7 853 U hervorgeht. Dieser bekannte höhenverstellbare Standfuß ist Teil eines fahrradartigen Heimtrainers, bei dem der untere Abschnitt des Lenkervorbaus verstellbar und festlegbar in dem Lenkkopf-Rohr aufgenommen ist und die Abstützung über die Vordergabel erfolgt. Die Innenkontur des von dem Lenkkopf-Rohr gebildeten Außenprofils ist quadratisch mit geraden Seitenwänden ausgebildet. Zwei verschiedene Innenprofile mit unterschiedlichem, nämlich zum einen quadratischem und zum anderen rundem Querschnitt sind vorgesehen, wobei diese Innenprofile nur auf zwei Seiten mit Innenseiten des Außenprofils in Berührung gebracht sind, und zwar mittels eines Klemmteils unter Wirkung einer Klemmschraube. Würde dieses Klemmteil weggelassen werden, wäre eine (brauchbare) seitliche Abstützung des Innenprofils in dem Außenprofil nicht gegeben. Das Innenprofil mit der runden Innenkontur ist zudem nicht flächig über die Länge in dem Außenprofil abgestützt, sondern linienförmig, da die Innenkontur des Außenprofils im Querschnitt tangential und damit punktförmig an der Außenkontur des Innenprofils anliegt.

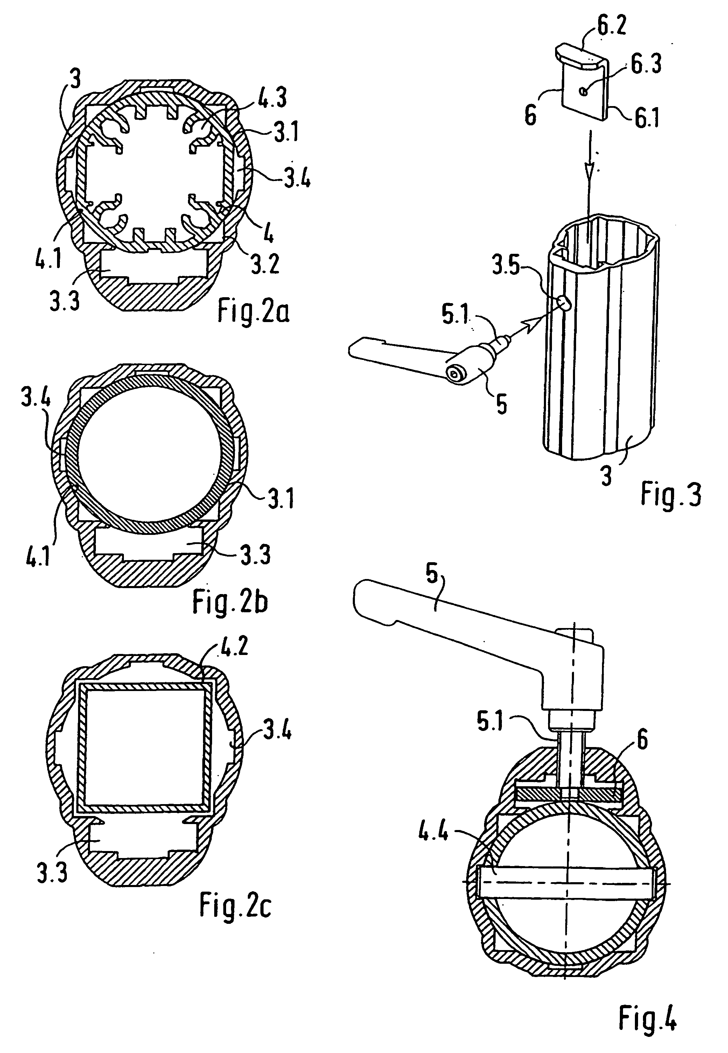

Die FR-A 2 332 449 zeigt eine teleskopartig verstellbare Vorrichtung mit Außen- und Innenprofil in zwei verschiedenen Ausführungsbeispielen mit jeweils anderer Ausgestaltung der Innenkontur, nämlich zum einen ein dreieckförmiges Innenprofil und zum anderen ein sechseckförmiges Innenprofil, wobei zum Abstützen des dreieckförmigen Innenprofils dieses direkt an Laufrollen gegen die Innenwandung des Außenprofils abgestützt ist, während das Sechseckprofil nach Fig. 2 über zusätzliche Längsprofile 4, 5 über die Rollen 3 an der Innenwandseite des Außenprofils abgestützt ist. Hieraus ergibt sich ein relativ komplizierter Aufbau mit entsprechend vielen Einzelteilen.

Ein weiterer höhenverstellbarer Standfuß ist in der Druckschrift DE 195 40 443 A1 angegeben, die einen Klemmmechanismus mit einer in einer seitlichen Nut in dem Außenprofil eingesetzten Klemmplatte zeigt, jedoch keine abschnitts- weise Anpassung der Innenkontur des Außenprofils zur Aufnahme von Innenprofilen mit unterschiedlicher Querschnittsform.

Der vorliegenden Erfindung liegt die Aufgabe zugrunde, einen möglichst einfach aufgebauten höhenverstellbaren Standfuß bereitzustellen, mit dem ein Anwender bei in Querrichtung unverkippbarer Ausbildung verschiedene Variationsmöglichkeiten hat.

Diese Aufgabe wird mit den Merkmalen des neuen Anspruches 1 gelöst. Durch die flächige Ausbildung der miteinander zusammenwirkenden Innenkonturabschnitte des Außenprofils und der verschiedenen Außenkonturabschnitte des Innenprofils und deren in Umfangsrichtung abwechselnde Anordnung ergibt sich eine stabile, in Querrichtung unverkippbare und in Längsrichtung leicht verschiebbare Anordnung, wobei die Innenprofile mit dem unterschiedlichen Querschnitt gleichermaßen eindeutig und leicht geführt sind, auch bei schwereren auf dem Kopfteil angebrachten Geräten. Die erfindungsgemäßen Maßnahmen ergeben wesentliche Vorteile.

Ist vorgesehen, dass in der Innenkontur des Außenprofils auf zwei gegenüberliegenden Seiten in Längsrichtung verlaufende Haltenuten eingebracht sind, dass die Innenkonturabschnitte auf Kreisbahnen liegen, dass ein Innenprofil mit kreisförmigem Querschnitt vorgesehen ist und dass durch das Innenprofil mindestens ein beidseitig über dessen Außenseite vorstehender Querzapfen geführt ist, der im eingesetzten Zustand des Innenprofils mit seinen beiden Endabschnitten in die Haltenuten eingreift, kann auch ein Innenprofil mit kreisförmigem Querschnitt auf einfache Weise unverdrehbar eingesetzt werden.

Das Innenprofil kann in dem Außenprofil leicht und stabil dadurch in einer gewünschten Höhenposition festgelegt werden, dass in der Innenkontur des Außenprofils eine längsverlaufende, im Querschnitt rechteckförmige oder T-förmige Klemmnut eingebracht ist, in der ein Klemmelement gelagert ist, welches mittels eines außen angeordneten Klemmhebels mit einem durch eine Gewindebohrung des Außenprofils geführten Gewindezapfen zum Festklemmen des Innenprofils in dem Außenprofil quer verstellbar ist.

Hierbei besteht eine vorteilhafte Ausgestaltung darin, dass das Klemmelement einen in der Klemmnut gelagerten Klemmplattenabschnitt und eine in eingesetztem Zustand auf der oberen Stirnseite des Außenprofils aufliegende Haltenase aufweist. Das Klemmelement ist dadurch leicht einsetzbar und wird positionsgenau gehalten, ohne dass es in der Klemmnut abrutschen kann.

Eine vorteilhafte Ausbildung für die Innenprofile ergibt sich dadurch, dass am oberen Endbereich des Innenprofils ein um eine horizontale Achse kippbares Kopfteil angebracht ist, das in verschiedenen Neigungsstellungen mittels eines weiteren Klemmhebels feststellbar ist.

Eine weitere vorteilhafte Ausgestaltung des Standfußes in Verbindung mit einer sicheren Führung des Innenprofils besteht darin; dass das Innenprofil zum Unterstützen einer Aufwärtsbewegung mit einer Gasfeder gekoppelt ist, die andererseits an dem Fußabschnitt angebunden ist.

Ein einfacher stabiler Aufbau des Standfußes wird weiterhin dadurch begünstigt, dass der Fußabschnitt eine Bodenplatte aufweist, auf der eine vertikal nach oben ragende Stütze angebracht ist, und dass die Säule mit dem Außenprofil auf die Stütze aufgeschoben und an dieser festgelegt ist.

Die Erfindung wird nachfolgend anhand von Ausführungsbeispielen unter Bezugnahme auf die Zeichnungen näher erläutert. Es zeigen:
- Fig. 1: einen Standfuß mit höhenverstellbarer Säule in perspektivischer Ansicht,
- Fig. 2a) bis 2c): Querschnitte der Säule nach Fig. 1 mit gleichem Außenprofil und unterschiedlichen Innenprofilen,
- Fig. 3: einen Klemmbereich der Säule in auseinandergenommenem Zustand der Klemmteile in perspektivischer Ansicht,
- Fig. 4: den Klemmbereich der Säule im Querschnitt und
- Fig. 5: eine perspektivische Darstellung der Säule mit einer Gasfeder in teilweise auseinandergenommenem Zustand.

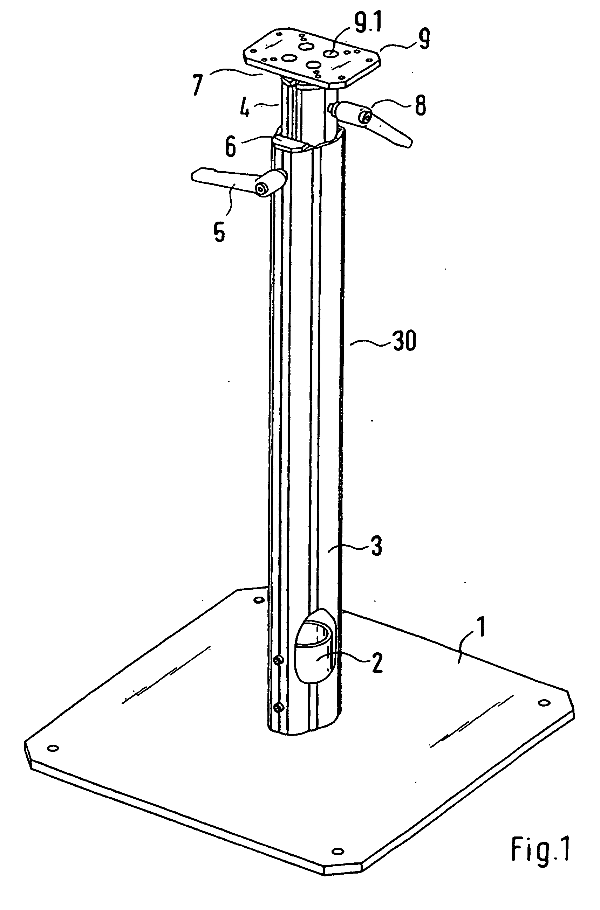

Ein in Fig. 1 gezeigter höhenverstellbarer Standfuß weist eine flache, einteilige Bodenplatte 1 mit einer darauf zentral angebrachten vertikalen Stütze 2 auf, an der ein aufgeschobenes Außenprofil 3 mit an die Stütze 2 angepasstem Innenquerschnitt befestigt ist. Das Außenprofil 3 ist Bestandteil einer höhenverstellbaren Säule 30, die als weiteren Bestandteil ein in das Außenprofil 3 eingeschobenes und darin teleskopartig höhenverstellbares Innenprofil 4 aufweist. Das Innenprofil 4 weist ein an seinem oberen Endbereich angebrachtes Kopfteil 7 mit einem um eine horizontale Achse neigbaren platten-artigen Aufnahmeelement 9 auf. Das Innenprofil 4 kann in dem Außenprofil 3 kontinuierlich höhenverstellt und in gewünschter Höhe mit einem Klemmmechanismus festgelegt werden, der einen manuell betätigbaren Klemmhebel 5 und ein von diesem quer zur Längsachse verstellbares Klemmelement 6 aufweist. Zum Feststellen des Aufnahmeelementes 9 in einer gewünschten Neigungsstellung ist ein weiterer Klemmhebel 8 vorgesehen. Das plattenartige Aufnahmeelement 9 weist Befestigungsbohrungen 9.1 sowie weitere Befestigungsbohrungen auf zum Anbringen eines Gerätegehäuses oder einer Ablageplatte.

Wie aus den Fig. 2a), b) und c) ersichtlich, weist das Außenprofil 3 im Querschnitt verschiedene Innenkonturabschnitte 3.1, 3.2 auf, die an unterschiedliche Außenkonturabschnitte 4.1, 4.2 verschiedener Innenprofile 4 abschnittsweise angepasst sind und das Innenprofil 4 auf mindestens drei Seiten seitlich derart abstützen, dass das Innenprofil unverkippbar und in Längsrichtung stabil verschiebbar geführt ist, wobei sich mit den Innenkonturabschnitten 3.1, 3.2 und den komplementären Außenkonturabschnitten 4.1, 4.2, über die Länge betrachtet, flächenhafte Führungsabschnitte ergeben, da der Querschnitt des Außenprofils über seine Länge gleich bleibt.

Bei dem Ausführungsbeispiel nach Fig. 2a) weist die Innenkontur des Außenprofils 3 gerundete Innenkonturabschnitte 3.1 sowie eckige Innenkonturabschnitte 3.2 auf, wobei die gerundeten Innenkonturabschnitte 3.1 voneinander beabstandet auf einer Kreisbahn liegen und ein im Wesentlichen im Querschnitt kreisförrniges Innenprofil 4 mit auf einer entsprechenden Kreisbahn liegenden gerundeten miteinander zusammenhängenden Außenkonturabschnitten 4.1 auf verschiedenen Seiten einfassen, so dass sich rundum eine kippstabile Abstützung des Innenprofils 4 in dem Außenprofil 3 ergibt. Beispielsweise sind vier größere und zwei kleinere Innenkonturabschnitte 3.1 vorhanden, die um das Innenprofil 4 um mehr als 180° zum Gewährleisten der kippstabilen Abstützung verteilt sind. Das Innenprofil 4 ist lediglich auf zwei gegenüberliegenden Längsseiten abgeflacht und weist in seinem Inneren längs verlaufende Schraubkanäle 4.3 auf, um darauf stirnseitig ein Montageelement des Kopfteils 7 zu montieren. Bei diesem Ausführungsbeispiel lässt sich das Innenprofil 4 um die vertikale bzw. längsverlaufende Achse in dem Außenprofil 3 drehen. Soll ein Drehen um die vertikale Achse vermieden werden, kann, entsprechend Fig. 4, durch das Innenprofil 4 ein Querzapfen 4.4 geführt werden, der z.B. beidseitig über die Außenseite des Innenprofils 4 vorsteht und in beiderseitige Haltenuten 3.4 ragt, die in der Innenkontur des Außenprofils 3 ausgebildet sind.

Wie Fig. 2b) zeigt, kann als Innenprofil 4 auch ein einfaches Rohrprofil mit kreisförmigem Querschnitt verwendet werden, das mit seinen Außenkonturabschnitten 4.1 in entsprechender Weise von den gerundeten Innenkonturabschnitten 3.1 kippsicher und gleitend geführt abgestützt ist, wie das Innenprofil 4 nach Fig. 2a). Auch hierbei kann entsprechend Fig. 4 eine Drehsicherung mit einem Querzapfen 4.4 wie bei dem Ausführungsbeispiel nach Fig. 2a) vorgesehen sein.

Bei dem Ausführungsbeispiel nach Fig. 2c) ist in das Außenprofil 3 ein im Wesentlichen quadratisches Innenprofil 4 eingesetzt, wobei vier in der Innenkontur des Außenprofils 3 ausgebildete eckige Innenkonturabschnitte 3.2 zur kippstabilen, gleitend geführten Lagerung des Innenprofils 4 unter Einfassung der Eckbereiche des Innenprofils 4 genutzt sind. Ähnlich können in dem Außenprofil 3 auch andere eckige Innenkonturabschnitte ausgebildet sein, um z.B. ein im Querschnitt rechteckförmiges, dreieckförmiges oder anderes mehreckförmiges Innenprofil 4 geführt aufzunehmen.

Die gerundeten Innenkonturabschnitte 3.1 müssen auch nicht kreisabschnittsförmig ausgebildet sein und auf einer Kreisbahn liegen, sondern können beispielsweise einem im Querschnitt ovalen Innenprofil angepasst sein.

Wie die Fig. 3 und 4 auch im Zusammenhang mit den Fig. 2a) bis 2c) zeigen, ist in der Innenkontur des Außenprofils 3 ferner eine vorzugsweise T-förmige Klemmnut 3.3 mit einer zum Inneren hin gelegenen Öffnung ausgebildet, in die das Klemmelement 6 des Klemmmechanismus zum Festlegen des Innenprofils 4 in einer gewünschten Höheneinstellung eingesetzt ist. Das Klemmelement 6 liegt mit einem Klemmplattenabschnitt 6.1 in der Klemmnut 3.3 und ist auf der oberen Stirnseite des Außenprofils 3 mittels einer nach außen ragenden Haltenase 6.2 sicher gegen ein Abrutschen in der Klemmnut 3.3 gehalten. Im Bereich des Klemmplattenabschnittes 6.1, und zwar einer darin eingebrachten Haltebohrung 6.3 des Klemmelementes 6 ist in dem Außenprofil 3 eine quer verlaufende Gewindebohrung 3.5 eingebracht, in die ein Gewindezapfen 5.1 des Klemmhebels 5 eingedreht ist, der mit einem Endbereich geringeren Durchmessers in die Haltebohrung 6.3 ragt und mit einem flanschartigen Absatz des Gewindezapfens 5.1 auf der Außenseite des Klemmplattenabschnittes 6.1 aufliegt, so dass das Klemmelement 6 bei Eindrehen des Gewindezapfens 5.1 nach innen verstellt wird und das Innenprofil 4 in dem Außenprofil 3 festklemmt.

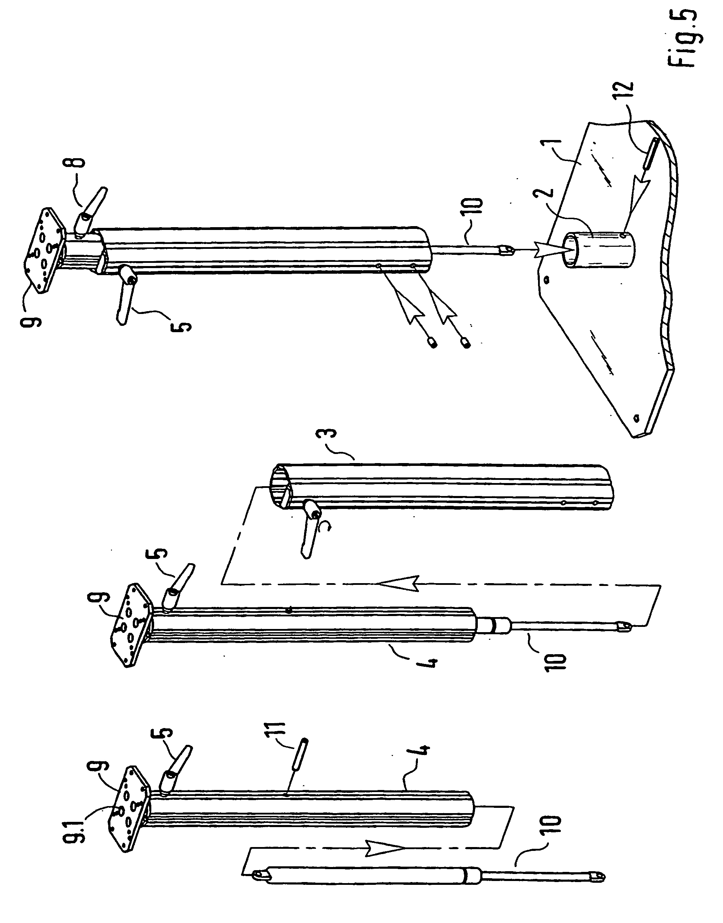

Bei dem in Fig. 5 gezeigten Aufbau ist das Innenprofil 4 mittels einer Gasfeder 10 an dem Fußabschnitt abgestützt, so dass ein Anheben des Innenprofils 4 mit dem Aufnahmeelement 9 und einem darauf befindlichen Gegenstand bzw. Gerät leicht möglich ist. Die Gasfeder 10 ist mittels mindestens eines Befestigungsbolzens 11 in dem hohlen Innenprofil 4 und andererseits mittels mindestens eines weiteren Befestigungsbolzens 12 in der hohlen Stütze 2 festgelegt, wodurch sich eine einfache Montage ergibt. Auch das Außenprofil 3, das mit seiner unteren Stirnseite auf der Bodenplatte 1 abgestützt ist, kann auf einfache Weise mittels Befestigungsbolzen bzw. Schrauben an der Stütze 2 festgelegt werden.

## Patentansprüche

1. Höhenverstellbarer Standfuß mit einer auf einem Fußabschnitt (1, 2) montierten, einen Kopfteil (7) aufweisenden Säule (30), die aus einem Außenprofil (3) und einem darin teleskopartig verschieblich gelagerten, in verschiedenen Stellungen festlegbaren Innenprofil (4) gebildet ist, wobei verschiedene austauschbare Innenprofile mit eckigem und gerundetem Außenkonturabschnitt (4.1) vorgesehen sind und die Innenkontur des Außenprofils (3) im Querschnitt an die Außenkonturabschnitte (4.1) der Innenprofile (4) angepasst ist,
**dadurch gekennzeichnet,**
**dass** die Säule (30) vertikal auf dem Fußabschnitt (1, 2) montiert ist, dass die Anpassung der Innenkontur des Außenprofils (3) und der Außenkonturabschnitte (4.1) der Innenprofile (4) in der Weise ausgeführt ist, dass im Querschnitt eckige und gerundete Innenkonturabschnitte (3.1, 3.2) aufeinanderfolgend angeordnet sind und die verschiedenen Innenprofile (4) jeweils mit mindestens drei in Umfangsrichtung beabstandeten Außenkonturabschnitten (4.1, 4.2) an mindestens drei gegeneinander versetzten Innenkonturabschnitten (3.1, 3.2) in Querrichtung unverkippbar, über die Länge flächig, abgestützt sind.

2. Standfuß nach Anspruch 1,
**dadurch gekennzeichnet,**
**dass** mindestens drei eckige Innenkonturabschnitte (3.2) und mindestens drei gerundete Innenkonturabschnitte (3.1) vorhanden sind, in denen mindestens zwei verschiedene Innenprofile (4) führbar sind, von denen das eine mindestens drei angepasste eckige Außenkonturabschnitte (4.2) und das andere mindestens drei angepasste gerundete Außenkonturabschnitte (4.1) aufweist.

3. Standfuß nach Anspruch 1 oder 2,
**dadurch gekennzeichnet,**
**dass** in der Innenkontur des Außenprofils (3) auf zwei gegenüberliegenden Seiten in Längsrichtung verlaufende Haltenuten (3.4) eingebracht sind,
**dass** die Innenkonturabschnitte (3.1) auf Kreisbahnen liegen,
**dass** ein Innenprofil (4) mit kreisförmigem Querschnitt vorgesehen ist und dass durch das Innenprofil (4) mindestens ein beidseitig über dessen Außenseite vorstehender Querzapfen (4.4) geführt ist, der im eingesetzten Zustand des Innenprofils mit seinen beiden Endabschnitten in die Haltenuten (3.4) eingreift.

4. Standfuß nach einem der vorhergehenden Ansprüche,
**dadurch gekennzeichnet,**
**dass** in der Innenkontur des Außenprofils (3) eine längsverlaufende, im Querschnitt rechteckförmige oder T-förmige Klemmnut (3.3) eingebracht ist, in der ein Klemmelement (6) gelagert ist, welches mittels eines außen angeordneten Klemmhebels (5) mit einem durch eine Gewindebohrung (3.5) des Außenprofils (3) geführten Gewindezapfen zum Festklemmen des Innenprofils (4) in dem Außenprofil (3) quer verstellbar ist.

5. Standfuß nach Anspruch 4,
**dadurch gekennzeichnet,**
**dass** das Klemmelement (6) einen in der Klemmnut (3.3) gelagerten Klemmplattenabschnitt (6.1) und eine in eingesetztem Zustand auf der oberen Stirnseite des Außenprofils (3) aufliegende Haltenase (6.2) aufweist.

6. Standfuß nach einem der vorhergehenden Ansprüche,
**dadurch gekennzeichnet,**
**dass** am oberen Endbereich des Innenprofils (4) ein um eine horizontale Achse kippbares Kopfteil (7) angebracht ist, das in verschiedenen Neigungsstellungen mittels eines weiteren Klemmhebels (8) feststellbar ist.

7. Standfuß nach einem der vorhergehenden Ansprüche,
**dadurch gekennzeichnet,**
**dass** das Innenprofil (4) zum Unterstützen einer Aufwärtsbewegung mit einer Gasfeder (10) gekoppelt ist, die andererseits an dem Fußabschnitt (1, 2) angebunden ist.

8. Standfuß nach einem der vorhergehenden Ansprüche,
**dadurch gekennzeichnet,**
**dass** der Fußabschnitt eine Bodenplatte (1) aufweist, auf der eine vertikal nach oben ragende Stütze (2) angebracht ist, und
**dass** die Säule (30) mit dem Außenprofil (3) auf die Stütze (2) aufgeschoben und an dieser festgelegt ist.

## Claims

1. Vertically adjustable base, having a column (30) mounted on a base portion (1, 2), said column having a top part (7) and being formed from an external profile (3) and an internal profile (4) which is mounted in said external profile in a telescopically displaceable manner and is securable in different positions, different interchangeable internal profiles being provided with an angular and a rounded external configuration portion (4.1), and the internal configuration of the external profile (3) being adapted, in cross-section, to the external configuration portions (4.1) of the internal profiles (4), **characterised in that** the column (30) is mounted vertically on the base portion (1,2), and **in that** the adaptation of the internal configuration of the external profile (3) and the external configuration portions (4.1) of the internal profiles (4) is effected in such a manner that internal configuration portions (3.1, 3.2), which are angular and rounded in cross-section, are disposed so as to succeed each other, and the different internal profiles (4) are each supported in a flat manner over the length with at least three external configuration portions (4.1, 4.2), which are spaced apart when viewed with respect to the circumferential direction, on at least three internal configuration portions (3.1, 3.2), which are offset from one another, so as to be non-pivotable in the transverse direction.

2. Base according to claim 1, **characterised in that** at least three angular internal configuration portions (3.2) and at least three rounded internal configuration portions (3.1) are provided, in which at least two different internal profiles (4) are guidable, one of which profiles has at least three adapted angular external configuration portions (4.2), and the other profile has at least three adapted rounded external configuration portions (4.1).

3. Base according to claim 1 or 2, **characterised in that** retaining grooves (3.4), extending in the longitudinal direction, are introduced in the internal configuration of the external profile (3) on two oppositely situated sides, **in that** the internal configuration portions (3.1) lie on circular paths, **in that** an internal profile (4) is provided with a circular cross-section, and **in that** at least one transverse pin (4.4) is guided through the internal profile (4), which pin protrudes on each side beyond the external side of said profile and, when the internal profile is in its inserted state, engages with its two end portions in the retaining grooves (3.4).

4. Base according to one of the preceding claims, **characterised in that** a longitudinally extending clamping groove (3.3), which is rectangular or T-shaped in cross-section, is introduced in the internal configuration of the external profile (3), in which clamping groove is mounted a clamping element (6) which is transversely adjustable by means of an externally disposed clamping lever (5), provided with a threaded pin which is guided through a threaded bore (3.5) of the external profile (3), for tightly clamping the internal profile (4) in the external profile (3).

5. Base according to claim 4, **characterised in that** the clamping element (6) has a clamping plate portion (6.1), which is mounted in the clamping groove (3.3), and a retaining projection (6.2) which rests, in the inserted state, on the upper end face of the external profile (3).

6. Base according to one of the preceding claims, **characterised in that** a top part (7), which is pivotable about a horizontal axis, is attached to the upper end region of the internal profile (4), said top part being securable in different positions of inclination by means of an additional clamping lever (8).

7. Base according to one of the preceding claims, **characterised in that** the internal profile (4) is coupled with a gas spring (10), which is connected at the other end to the base portion (1, 2), to assist an upward movement.

8. Base according to one of the preceding claims, **characterised in that** the base portion has a base plate (1), on which is fitted a vertically upwardly protruding support (2), and **in that** the column (30) with the external profile (3) is slipped over the support (2) and is secured thereto.

## Revendications

1. Pied réglable en hauteur comprenant une colonne (30) montée sur une base (1, 2) et présentant une partie supérieure (7) qui est formée par un profilé extérieur (3) et un profilé intérieur (4) pouvant être immobilisé dans différentes positions, qui est monté dans le précédent de façon à pouvoir coulisser de manière télescopique, différents profilés intérieurs interchangeables présentant un segment de pourtour anguleux et arrondi (4.1) étant prévus et la section transversale du contour intérieur du profilé extérieur (3) étant adaptée aux segments de pourtour extérieur (4.1) des profilés intérieurs (4), **caractérisé en ce que** la colonne (30) est montée verticalement sur la base (1, 2), **en ce que** le pourtour intérieur du profilé extérieur (3) est adapté aux segments de pourtour extérieur (4.1) des profilés intérieurs (4) de telle manière que des segments de pourtour intérieur de section anguleuse et arrondie (3.1, 3.2) se succèdent et que les différents profilés intérieurs (4) prennent chaque fois appui à plat sur toute la longueur avec au moins trois segments de pourtour extérieur (4.1, 4.2) espacés dans la direction du pourtour sur au moins trois segments de pourtour intérieur (3.1, 3.2) décalés les uns par rapport aux autres, de telle sorte qu'ils ne puissent pas basculer dans la direction transversale.

2. Pied selon la revendication 1, **caractérisé en ce qu'**il compte au moins trois segments de pourtour intérieur anguleux (3.2) et au moins trois segments de pourtour intérieur arrondis (3.1) dans lesquels peuvent être guidés au moins deux profilés intérieurs différents (4) dont l'un présente au moins trois segments de pourtour extérieur anguleux adaptés (4.2) et l'autre au moins trois segments de pourtour extérieur arrondis adaptés (4.1).

3. Pied selon la revendication 1 ou 2, **caractérisé en ce que** des rainures de fixation (3.4) s'étendant dans la direction longitudinale sur deux faces opposées sont ménagées dans le pourtour intérieur du profilé extérieur (3), **en ce que** les segments de pourtour intérieur (3.1) sont situés sur des trajectoires circulaires, **en ce qu'**est prévu un profilé intérieur (4) de section transversale circulaire et **en ce qu'**au moins une cheville transversale (4.4) traverse de part en part le profilé intérieur (4), fait saillie de part et d'autre de la face extérieure de ce dernier, et, lorsque le profilé intérieur est en place, est encastrée avec ses deux segments d'extrémité dans les rainures de fixation (3.4).

4. Pied selon l'une des revendications précédentes, **caractérisé en ce qu'**une rainure de serrage (3.3) rectangulaire ou en forme de T s'étendant longitudinalement est ménagée dans le pourtour intérieur du profilé extérieur (3), dans laquelle est monté un élément de serrage (6) pouvant être déplacé transversalement au moyen d'un levier de serrage (5) situé à l'extérieur, qui est doté d'une goupille filetée traversant un taraudage (3.5) du profilé extérieur (3) pour immobiliser le profilé intérieur (4) dans le profilé extérieur (3).

5. Pied selon la revendication 4, **caractérisé en ce que** l'élément de serrage (6) présente un segment de plaque de serrage (6.1) monté dans la rainure de serrage (3.3) et un ergot de fixation (6.2) qui, une fois en place, repose sur la face frontale supérieure du profilé extérieur (3).

6. Pied selon l'une des revendications précédentes, **caractérisé en ce qu'**une partie supérieure (7) pouvant basculer autour d'un axe horizontal est fixée dans la zone d'extrémité supérieure du profilé intérieur (4), qui peut être immobilisée dans différentes positions inclinées au moyen d'un levier de serrage supplémentaire (8).

7. Pied selon l'une des revendications précédentes, **caractérisé en ce que**, pour accompagner un mouvement ascendant, le profilé intérieur (4) est couplé à un ressort à gaz (10) qui est fixé par l'autre extrémité à la base (1, 2).

8. Pied selon l'une des revendications précédentes, **caractérisé en ce que** la base présente une plaque de base (1) sur laquelle est fixé un montant (2) pointant verticalement vers le haut, et **en ce que** la colonne (30) est enfilée par le profilé extérieur (3) sur le montant (2) et est immobilisée sur celui-ci.
